# FASCICULE DE BREVET EUROPEEN

(11) **EP 1 908 667 B1**
(45) Date de publication et mention de la délivrance du brevet: **29.07.2009**
(21) Numéro de dépôt: 07291178.7
(22) Date de dépôt: 28.09.2007
(51) Int. Cl.: B62D 25/10

(54) **Bloc avant de vehicule automobile**
Vorderblock eines Kraftfahrzeugs
Front block of an automobile

(30) Priorité: 04.10.2006 FR 0608708
(43) Date de publication de la demande: 09.04.2008
(73) Titulaire: Faurecia Bloc Avant, 92000 Nanterre (FR)
(72) Inventeur: Bierjon, Didier, 25400 Audincourt (FR)
(74) Mandataire: Blot, Philippe Robert Emile

(56) Documents cités:
- EP-A- 1 666 313
- FR-A1- 2 698 334

## Description

La présente invention concerne un bloc avant de véhicule automobile, du type comprenant :
- des éléments de caisse délimitant un logement de réception d'un moteur ou d'un compartiment de rangement d'objets ;
- un ensemble d'obturation du logement comprenant au moins les éléments du groupe constitué par :
   - un capot supérieur ;
   - des ailes latérales s'étendant vers le bas à partir des bords latéraux du capot ;
   - un bouclier de pare-chocs s'étendant vers le bas à partir du bord avant du capot ;
   - deux projecteurs s'étendant à l'avant du capot et/ou du bouclier ;
   les éléments du groupe étant solidaires les uns des autres pour être déplacés conjointement par rapport aux éléments de caisse, entre une position d'obturation du logement et une position d'accès au logement .

On connaît de FR-A-2 698 334 un bloc avant du type précité comportant un ensemble d'obturation monobloc dans lequel le capot, les ailes et le bouclier sont déplaçables conjointement par rapport aux éléments de caisse.

Dans ce bloc avant, le capot, les ailes et le bouclier de l'ensemble d'obturation sont venus de matière. Ainsi, l'aspect esthétique du bloc avant est amélioré, puisqu'il n'existe pas de jeu variable entre ces éléments.

Lorsqu'une intervention mineure doit être effectuée dans le moteur, un accès au moteur est assuré par une trappe d'accès prévue dans le capot. Pour des interventions majeures, l'ensemble d'obturation est déplacé d'un seul bloc par rapport aux éléments de caisse pour accéder au moteur.

Un tel bloc avant ne donne pas entière satisfaction. En effet, en cas de choc même mineur sur l'un des éléments précités de l'ensemble d'obturation, il est nécessaire de remplacer la totalité de l'ensemble d'obturation pour réparer le véhicule. Le coût de la réparation est donc élevé, notamment lorsque les dégâts sur la carrosserie sont mineurs.

Un but de l'invention est d'obtenir un bloc avant comprenant un ensemble d'obturation d'aspect esthétique satisfaisant, tout en étant réparable à faible coût.

A cet effet, l'invention a pour objet un bloc avant du type précité, caractérisé en ce que chaque élément du groupe est démontable de manière réversible par rapport à tous les autres éléments du groupe.

Le bloc avant selon l'invention peut comprendre l'une ou plusieurs des caractéristiques suivantes, prise(s) isolément, ou suivant toute(s) combinaison(s) techniquement possible(s) :
- l'ensemble d'obturation comprend une doublure d'indexation, tous les éléments du groupe étant montés de manière amovible sur la doublure, la doublure étant déplaçable conjointement avec tous les éléments du groupe par rapport aux éléments de caisse ;
- l'ensemble d'obturation comprend des moyens de fixation de chaque élément du groupe sur l'ensemble d'obturation, les moyens de fixation comprenant, pour chaque élément, un flan de fixation solidaire de l'élément et une gouttière de réception du flan de fixation ;
- les moyens de fixation comprennent une gouttière de réception commune à deux éléments adjacents du groupe, la gouttière commune recevant un flan de fixation de chaque élément adjacent ;
- la gouttière de fixation est rapportée sur la doublure ;
- la gouttière de fixation est ménagée dans la doublure ;
- le ou chaque flan délimite une ouverture de réception, les moyens de fixation comprenant un organe d'encliquetage de chaque flan solidaire de la gouttière, l'organe d'encliquetage étant engagé dans la ou dans chaque ouverture de réception ;
- l'organe d'encliquetage est frangible ;
- les moyens de fixation comprennent un organe de vissage rapporté à travers la gouttière et les flans de fixation ; et
- l'organe de vissage est reçu dans une ouverture de réception ménagée dans le flan, le flan comprenant une région de dégagement propre à autoriser le dégagement de l'organe de vissage hors du flan, la région de dégagement s'étendant entre l'ouverture de réception et un bord libre du flan.

L'invention sera mieux comprise à la lecture de la description qui va suivre, donnée uniquement à titre d'exemple, et faite en se référant aux dessins annexés, sur lesquels :
- la Figure 1 est une vue en perspective éclatée de l'ensemble d'obturation d'un premier bloc avant selon l'invention ;
- la Figure 2 est une vue en coupe suivant un plan vertical transversal d'une partie de l'ensemble d'obturation représenté sur la Figure 1 ;
- la Figure 3 est une vue en perspective d'un détail des moyens de fixation réversibles du capot et de l'aile dans l'ensemble d'obturation représenté sur la Figure 2 ;
- la Figure 4 est une vue de côté du premier bloc avant selon l'invention, illustrant deux configurations de l'ensemble d'obturation représenté sur la Figure 1 ;
- la Figure 5 est une vue analogue à la Figure 1 des parties pertinentes de l'ensemble d'obturation d'un deuxième bloc avant selon l'invention ;
- la Figure 6 est une vue analogue à la Figure 3 des moyens de fixation de l'ensemble d'obturation d'un troisième bloc avant selon l'invention ;
- la Figure 7 est une vue analogue à la Figure 2 des moyens de fixation de l'ensemble d'obturation d'un quatrième bloc avant selon l'invention ;
- la Figure 8 est une vue de côté d'un détail d'un élément de carrosserie pour un ensemble d'obturation d'un bloc avant selon l'invention ; et
- la Figure 9 est une vue analogue à la Figure 8 d'une variante du bloc avant de la Figure 8.

Dans tout ce qui suit, les orientations sont les orientations habituelles d'un véhicule automobile. A cet effet, les termes "supérieur", "inférieur", "haut", "bas", "horizontal", "vertical", "transversal", "longitudinal", "avant", "arrière", "gauche", "droit" s'entendent par rapport au sens normal de circulation d'un véhicule et à la position d'un conducteur.

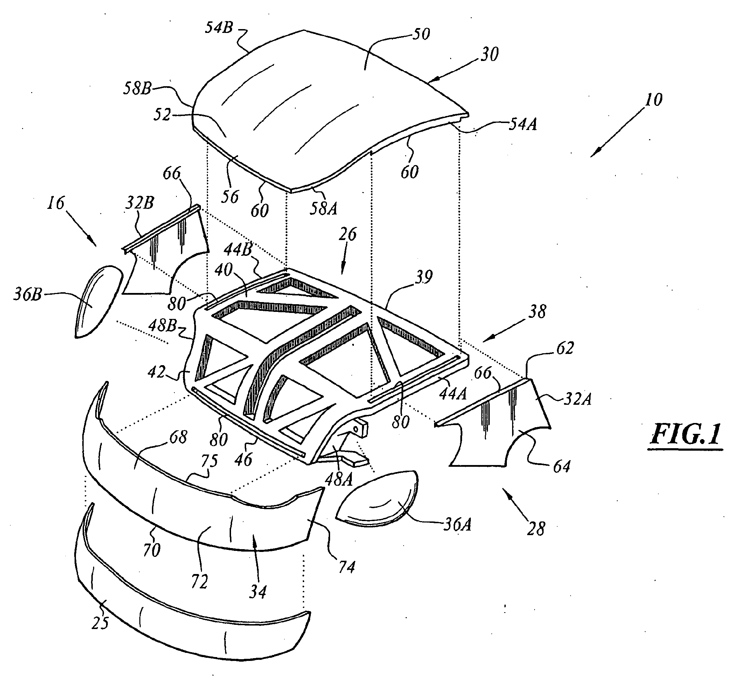

Un premier bloc avant 10 selon l'invention est représenté sur les Figures 1 à 4.

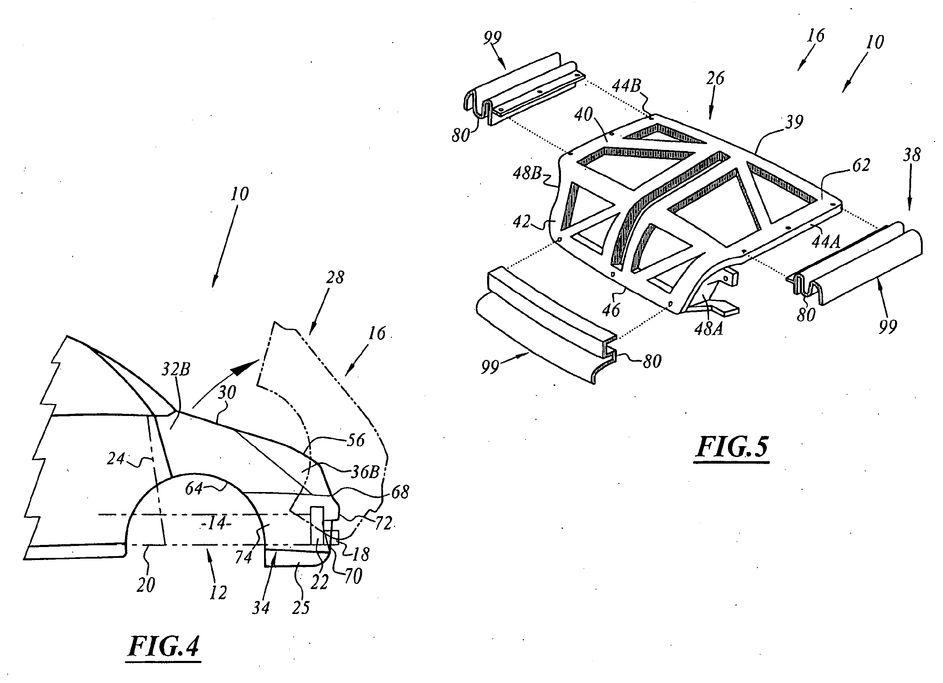

Comme illustré par la Figure 4, le bloc avant 10 comprend des éléments de caisse 12, un compartiment moteur 14 délimité par les éléments de caisse 12, un ensemble mobile 16 d'obturation du compartiment moteur 14, et des moyens 18 d'articulation de l'ensemble d'obturation 16 par rapport aux éléments de caisse 12.

De manière classique, les éléments de caisse 12 comprennent deux longerons latéraux 20 parallèles, raccordés à l'avant par une structure transversale 22, comme par exemple une poutre avant de pare-chocs.

Les longerons 20 s'étendent à l'avant d'un tablier 24 séparant le compartiment moteur 14 de l'habitacle du véhicule.

Le compartiment 14 s'étend entre les longerons gauche et droit 20, à l'avant du tablier 24, et à l'arrière de la structure 22. Il contient un moteur (non représenté).

En variante, le moteur est placé à l'arrière du véhicule et les éléments de caisse 12 délimitent à l'avant un compartiment de rangement d'objets.

La structure transversale 22 est couverte à l'avant et sur les cotés par un bouclier inférieur 25 fixé sur les éléments de caisse 12.

Comme illustré par la Figure 1, l'ensemble d'obturation 16 comprend une doublure structurelle 26 et un groupe d'éléments 28 de carrosserie fixés sur la doublure 26, mobiles conjointement par rapport aux éléments de caisse 12. Le groupe d'éléments 28 est constitué par un capot supérieur 30, deux ailes latérales 32A, 32B, un bouclier avant supérieur 34, et deux projecteurs 36A, 36B insérés entre le capot 30, les ailes 32A, 32B et le bouclier 34.

L'ensemble d'obturation 16 comprend en outre des moyens 38 de fixation amovible des éléments 28 les uns par rapport aux autres.

En référence à la Figure 1, la doublure 26 est formée par une ossature ajourée 38 réalisée en matière composite ou hybride.

L'ossature 38 comprend une partie supérieure 40 sensiblement horizontale et une partie avant 42 s'étendant sensiblement dans un plan vertical transversal.

La partie supérieure 40 présente une largeur, prise entre son montant gauche 44A et son montant droit 44B, sensiblement égale à celle du capot 30.

La partie avant 42 s'étend à l'avant de la partie supérieure 40, vers le bas, jusqu'à une poutre transversale inférieure 46 qui délimite son bord inférieur.

L'ossature 38 délimite, à gauche et à droite, deux logements latéraux 48A, 48B de réception des projecteurs 36A, 36B s'étendant sous les montants 44A, 44B et au-dessus de la poutre 46.

Le capot supérieur 30 est fixé sur la partie supérieure 40 par l'intermédiaire des moyens de fixation 38. Il est réalisé par exemple à base d'une tôle couverte de peinture. Il comprend une région arrière 50 de largeur sensiblement égale à la distance séparant les montants 44A, 44B, et un bandeau avant 52 s'étendant vers le bas pour obturer une région supérieure de la partie avant 42 de la doublure.

La région arrière 50 définit un bord gauche 54A et un bord droit 54B s'étendant de manière adjacente aux ailes 32A, 32B, lorsque les éléments 28 sont tous fixés sur la doublure 26.

Le bandeau 52 délimite un bord avant 56 s'étendant de manière adjacente au bouclier supérieur 34 entre les projecteurs 36A, 36B. Il comprend en outre un bord gauche 58A et un bord droit 58B qui s'étendent respectivement le long du projecteur 36A et du projecteur 36B.

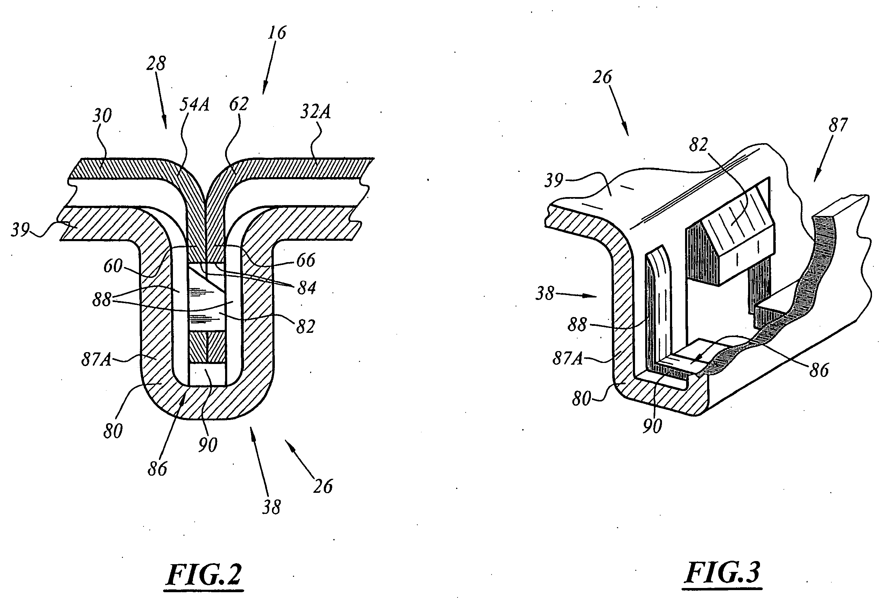

Le capot 30 présente, le long de ses bords latéraux 54A, 54B et de son bord avant 56, des flans 60 de fixation visibles sur la Figure 3 et destinés à être engagés dans les moyens de fixation 38, comme on le verra plus bas.

Chaque aile 32A, 32B s'étend vers le bas à partir d'un bord latéral 54A, 54B du capot. Chaque aile 32A, 32B définit un bord supérieur 62 sensiblement horizontal, adjacent à un bord latéral 54A, 54B du capot 30, et un bord inférieur 64 délimitant une ouverture d'accès aux roues.

L'aile 32A comprend, le long de son bord supérieur 62, un flan 66 de fixation longitudinal destiné à être inséré dans les moyens de fixation 38 contre le flan 60 du capot 30, comme on le verra plus bas.

Le bouclier supérieur 34 s'étend sensiblement verticalement entre un bord supérieur 68 et un bord inférieur 70 adjacent au bouclier inférieur 25. Il comprend une région centrale 72 couvrant transversalement l'avant de la structure transversale 22 et deux joues latérales 74 s'étendant longitudinalement sous les projecteurs 36A, 36B à gauche et à droite de la structure transversale 22.

Le bord supérieur 68 est adjacent au bord avant 56 du bandeau 52 entre les projecteurs 36A, 36B. Il s'étend par ailleurs sous les projecteurs 36A, 36B de manière adjacente à ces projecteurs.

Le bandeau 34 comprend, le long du bord 68, un flan supérieur 75 de fixation destiné à être inséré dans les moyens de fixation 38 contre le flan inférieur 60 de fixation du capot s'étendant le long du bord avant 56A.

Les projecteurs 36A, 36B sont fixés de manière amovible dans les logements 48A, 48B sur l'ossature 39. Ils affleurent les ailes 32A, 32B à l'arrière, le capot 30 sur le dessus, et le bouclier supérieur 34 en dessous.

Dans l'exemple représenté sur les Figures 2 et 3, les moyens de fixation 38 comprennent des gouttières 80 ménagées dans l'ossature 38 le long des montants 44A, 44B, et le long de la poutre 46. Les moyens 38 comportent, pour chaque gouttière 80, au moins une patte 82 d'encliquetage destinée à être insérée dans des ouvertures complémentaires 84 ménagées dans les flans de fixation 60, 66, 75 des éléments 28.

Les moyens de fixation 38 comprennent en outre des butées d'indexation 86 des flans 60, 66, 75.

Chaque gouttière 80 délimite une fente 87 s'ouvrant vers l'extérieur du véhicule et présentant une largeur légèrement supérieure à l'épaisseur de deux flans 60, 66 adjacents. La longueur des gouttières 80 est sensiblement égale à la longueur des flans 60, 66 qui sont insérés dans la gouttière 80.

Les pattes d'encliquetage 82 sont disposées en saillie dans la gouttière 80. Elles sont venues de matière avec les parois latérales 87A formant la gouttière 80 et sont mobiles par rapport à ces parois 87A entre une position déployée de fixation et une position rétractée d'insertion des flans 60, 66. Chaque patte 82 est frangible lorsque l'élément 28 recevant la patte 82 se déplace en cas de choc contre le véhicule.

Les butées d'indexation 86 comprennent une nervure de fond 90 disposée dans le fond de la gouttière 80 et deux nervures verticales 92 disposées sur les parois 87A en regard de la gouttière 80.

Selon l'invention, chaque élément 28 de l'ensemble d'obturation 16 du groupe constitué par le capot supérieur 30, les ailes latérales 32, le bouclier supérieur 34 et les projecteurs 36, est démontable de manière réversible par rapport à tous les autres éléments 28 de ce groupe.

Ainsi, le capot 30 et les ailes 32A, 32B sont mobiles l'un par rapport à l'autre et par rapport à la doublure 26 entre une position démontée représentée sur la Figure 1 et une position assemblée représentée sur la Figure 2.

Dans la position assemblée, chaque flan de fixation 60 du capot 30 a été introduit dans une gouttière 80 en même temps que le flan de fixation 66 d'une aile 32A, 32B. Les flans 60, 66 sont calés entre les nervures verticales 88, ce qui assure un jeu longitudinal sensiblement nul entre le capot 30 et chaque aile 32A, 32B le long de chaque gouttière 80.

En outre, les flans 60, 66 sont placés en butée contre la nervure de fond 90 ce qui assure un affleurement entre la surface d'aspect extérieur du capot 30 et la surface d'aspect extérieur de chaque aile 32A, 32B.

Chaque patte d'encliquetage 82 est insérée dans les ouvertures en regard 84 ménagées dans le flan de fixation 60 du capot 30 et dans le flan de fixation 66 de chaque aile 32A, 32B pour maintenir en position les ailes 32A, 32B et le capot 30.

Dans la position démontée, chaque patte 82 a été extraite des ouvertures de réception 84 et les flans 60, 66 respectifs ont été retirés de la gouttière 80.

De même, le capot 30 et le bouclier inférieur 34 sont mobiles l'un par rapport à l'autre et par rapport à la doublure 26 entre une position démontée et une position assemblée dans laquelle le flan de fixation 60 situé le long du bord avant 56 du capot 30 et le flan de fixation 75 situé le long du bord supérieur 68 du bouclier supérieur 34 ont été insérés dans une gouttière 80 et sont maintenus dans cette gouttière 80 par des pattes d'encliquetage 82 analogues à celles représentées sur la Figure 2.

Les projecteurs 36 sont en outre fixés de manière démontable sur la doublure 26.

Ainsi, chaque élément 28 du groupe constitué par le capot 30, les ailes 32A, 32B, le bouclier supérieur 34, et les projecteurs 36A, 36B est démontable de manière réversible par rapport à tous les autres éléments 28 de ce groupe.

Lorsque les éléments 28 du groupe sont tous montés sur la doublure 26, l'ensemble d'obturation 16 est mobile entre une configuration d'obturation du compartiment moteur 14 représentée en traits pleins sur la Figure 4, et une configuration d'accès au compartiment moteur 14, représentée en trait mixte sur la Figure 4, dans laquelle l'ensemble d'obturation 16 a été pivoté vers l'avant autour d'un axe transversal passant sensiblement par le bord inférieur 70 du bouclier 34, par l'intermédiaire des moyens d'articulation 18.

Lors de ce déplacement, les éléments 28 du groupe sont solidaires les uns des autres pour être déplacés conjointement par rapport aux éléments de caisse 12 entre la configuration d'obturation du logement et la configuration d'accès au logement.

Le fonctionnement du bloc avant 10 selon l'invention va maintenant être décrit.

Initialement, les différents éléments du groupe 28 sont rapportés sur la doublure 26. A cet effet, les projecteurs 36A, 36B sont vissés dans les logements 48A, 48B respectifs.

Puis, les flans de fixation 66 des ailes 32A, 32B sont introduits dans les gouttières 80 conjointement avec les flans de fixation 60 situés le long du bord gauche 54A et du bord droit 54B du capot 30, jusqu'à ce que les flans 60, 66 entrent en butée contre les nervures de fond 90. Lors de ces déplacements, les pattes d'encliquetage 82 pénètrent dans les ouvertures complémentaires 84 pour maintenir en position de manière réversible les ailes 32A, 32B et le capot 30 sur la doublure 26.

De même, les flans de fixation 60, 75 situés respectivement le long du bord avant 56A du capot 30 et le long du bord supérieur 68 du bouclier 34 sont introduits conjointement dans la gouttière 80 ménagée dans la poutre transversale inférieure 46 et sont maintenus par encliquetage à l'intérieur de la gouttière.

Une fois tous les éléments 28 du groupe fixés sur la doublure 26, le jeu entre ces éléments est sensiblement nul en raison du calage des flans 60, 66 entre les nervures verticales 92 des butées d'indexation 86. En outre, les surfaces supérieures d'aspect du capot 30 et des ailes latérales 32A, 32B affleurent, de même que les surfaces avant du bandeau 52 et du bouclier 34. L'ensemble d'obturation 16 présente donc un aspect esthétique très satisfaisant.

En cas de choc contre l'un des éléments 28 du groupe, par exemple contre une aile 32A, l'aile 32A est démontée par rapport à la doublure 26 et par rapport à chacun des autres éléments 28 de l'ensemble d'obturation 16. A cet effet, le flan de fixation 66 de l'aile 32A est extrait hors de la gouttière 80 en désengageant chaque patte d'encliquetage 82 hors des ouvertures 84. L'intégrité de l'élément 28 adjacent, dans cet exemple le capot 30, est préservée.

Le démontage de l'aile 32A est donc parfaitement réversible puisque cette aile 32A endommagée peut être remplacée par une aile 32A identique, sans qu'il soit nécessaire de remplacer le capot 30 ou un autre élément 28. Il est donc possible de diminuer fortement les coûts de réparation d'un tel ensemble d'obturation 16, sans nuire à l'aspect esthétique du véhicule.

Dans la variante représentée sur la Figure 5, les gouttières 80 ne sont pas ménagées dans l'ossature 39 de la doublure 26.

Des éléments presseurs 99 sont rapportés sur la doublure 26 le long des montants 44A, 44B et à l'avant de la poutre inférieure 46. Les gouttières 80 sont ménagées dans ces éléments presseurs 99.

Le fonctionnement de cette variante est identique au fonctionnement de l'ensemble d'obturation 26 du premier bloc avant 10 selon l'invention.

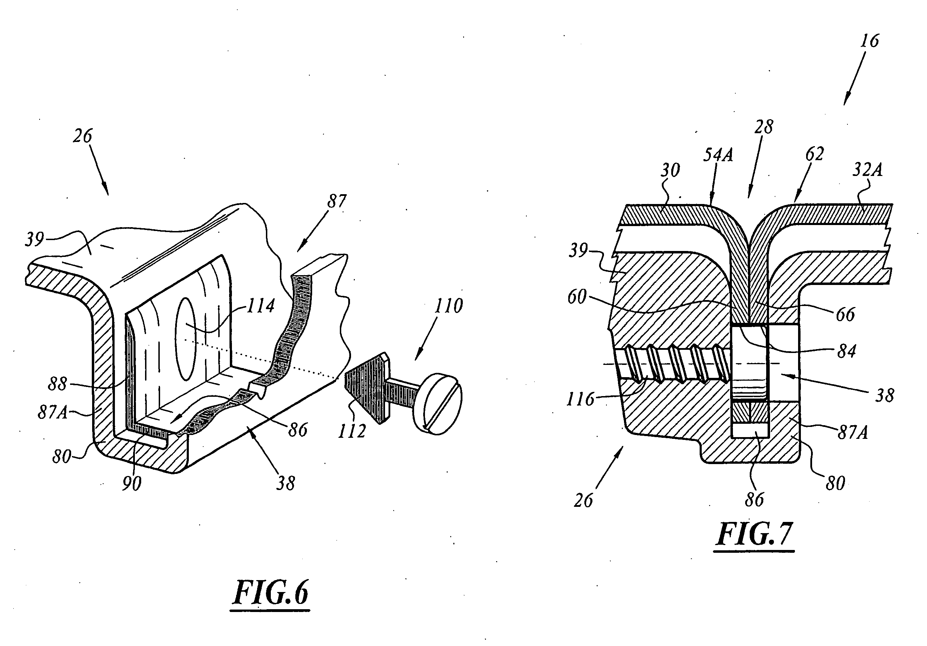

Dans une variante illustrée par la Figure 6, les moyens de fixation 38 comprennent une vis 110 de fixation quart de tour. La vis 110 comprend une extrémité libre 112 de largeur supérieure à son épaisseur. Dans cet exemple, les parois 87A en regard de la gouttière 80 délimitent des ouvertures verticales 114 de largeur supérieure à l'épaisseur de l'extrémité libre 112 de la vis 110, mais inférieure à la largeur de l'extrémité libre 112.

Les ouvertures 114 s'étendent en regard des ouvertures complémentaires 84 des flans de fixation 60, 66 des éléments 28, lorsque ces flans 60, 66 sont introduits dans la gouttière 80.

Après insertion des flans 60, 66 dans les gouttières 80, une vis quart de tour 110 est fournie pour chaque ouverture de réception 84 ménagée dans les flans 60, 66. Puis, la vis 110 est introduite à travers les ouvertures 114 et les ouvertures 84 complémentaires avant d'être tournée d'un quart de tour pour assurer le verrouillage réversible des flans de fixation 60, 66 dans les gouttières 80.

Dans la variante représentée sur la Figure 7, une vis 116 auto-taraudeuse est fixée dans les parois 87A en regard de la gouttière 80 en s'engageant dans les ouvertures 84.

Dans une autre variante (non représentée), un écrou est rapporté à l'arrière d'une des parois 87A délimitant la gouttière 80. La vis 116 est introduite dans cet écrou.

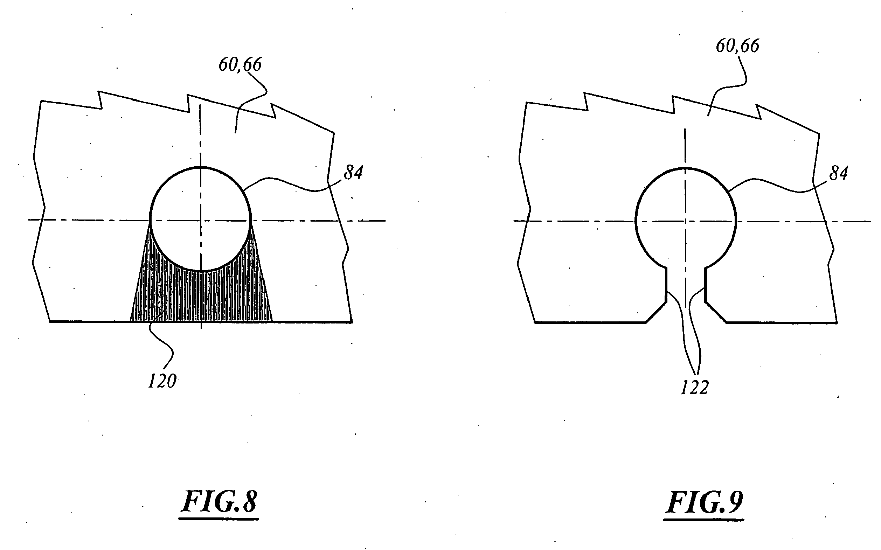

Dans une variante représentée sur la Figure 8, la région 120 de chaque flan 60, 66 située sous chaque ouverture 84 complémentaire, entre l'ouverture 84 et le bord libre du flan 60, 66 est frangible. Elle présente ainsi une résistance mécanique inférieure à celle des autres régions entourant l'ouverture 84. Ainsi, en cas de choc contre l'élément 28 présentant cette région frangible 120, l'organe de fixation 110, 116 déchire la région 120 pour libérer l'élément 28.

Dans la variante représentée sur la Figure 9, chaque ouverture 84 est prolongée vers le bas par un passage 122 débouchant à travers le bord libre sur le fond de la gouttière 80. Le passage 122 présente une largeur inférieur à celle de l'ouverture 84 et à celle de l'organe de vissage 110, 114.

En cas de choc contre un élément 28, l'organe de vissage 110, 114 est extrait hors de l'ouverture 84 à travers le passage 122 pour libérer l'élément 28 par rapport à la doublure 26.

## Revendications

1. Bloc avant (10) de véhicule automobile, du type comprenant :
- des éléments de caisse (12) délimitant un logement (14) de réception d'un moteur ou d'un compartiment de rangement d'objets ;
- un ensemble (16) d'obturation du logement comprenant au moins les éléments (28) du groupe constitué par :
• un capot (30) supérieur ;
• des ailes latérales (32A, 32B) s'étendant vers le bas à partir des bords latéraux (54A, 54B) du capot (30) ;
• un bouclier (34) de pare-chocs s'étendant vers le bas à partir du bord avant (56) du capot (30) ;
• deux projecteurs (36A, 36B) s'étendant à l'avant du capot (30) et/ou du bouclier (34) ;
les éléments (28) du groupe étant solidaires les uns des autres pour être déplacés conjointement par rapport aux éléments de caisse (12), entre une position d'obturation du logement (14) et une position d'accès au logement (14) ;
**caractérisé en ce que** chaque élément (28) du groupe est démontable de manière réversible par rapport à tous les autres éléments (28) du groupe.

2. Bloc avant (10) selon la revendication 1, **caractérisé en ce que** l'ensemble d'obturation (16) comprend une doublure (26) d'indexation, tous les éléments (28) du groupe étant montés de manière amovible sur la doublure (26), la doublure (26) étant déplaçable conjointement avec tous les éléments (28) du groupe par rapport aux éléments de caisse (12).

3. Bloc avant (10) selon l'une des revendications 1 ou 2, **caractérisé en ce que** l'ensemble d'obturation (16) comprend des moyens (38) de fixation de chaque élément (28) du groupe sur l'ensemble d'obturation (16), les moyens de fixation (38) comprenant, pour chaque élément (28), un flan (60, 66) de fixation solidaire de l'élément (28) et une gouttière (80) de réception du flan de fixation (60, 66).

4. Bloc avant (10) selon la revendication 3, **caractérisé en ce que** les moyens de fixation (38) comprennent une gouttière de réception (80) commune à deux éléments (28) adjacents du groupe, la gouttière commune (80) recevant un flan de fixation (60, 66) de chaque élément (28) adjacent.

5. Bloc avant (10) selon la revendication 3 ou 4, prise en combinaison avec la revendication 2, **caractérisé en ce que** la gouttière de fixation (80) est rapportée sur la doublure (26).

6. Bloc avant (10) selon la revendication 3 ou 4, prise en combinaison avec la revendication 2, **caractérisé en ce que** la gouttière de fixation (80) est ménagée dans la doublure (26).

7. Bloc avant (10) selon l'une quelconque des revendications 3 à 6, **caractérisé en ce que** le ou chaque flan (60, 66) délimite une ouverture de réception (84), les moyens de fixation (38) comprenant un organe (82) d'encliquetage de chaque flan (60, 66) solidaire de la gouttière (80), l'organe d'encliquetage (82) étant engagé dans la ou dans chaque ouverture de réception (84).

8. Bloc avant (10) selon la revendication 7, **caractérisé en ce que** l'organe d'encliquetage (84) est frangible.

9. Bloc avant (10) selon l'une quelconque des revendications 3 à 6,
**caractérisé en ce que** les moyens de fixation (38) comprennent un organe de vissage (110 ; 116) rapporté à travers la gouttière (80) et les flans (60, 66) de fixation.

10. Bloc avant (10) selon la revendication 9, **caractérisé en ce que** l'organe de vissage (110 ; 116) est reçu dans une ouverture de réception (84) ménagée dans le flan (60, 66), le flan (60, 66) comprenant une région de dégagement (120 ; 122) propre à autoriser le dégagement de l'organe de vissage (110 ; 116) hors du flan (60, 66), la région de dégagement (120 ; 122) s'étendant entre l'ouverture de réception (84) et un bord libre du flan (60, 66).

## Claims

1. A front end module (10) of a motor vehicle of the type comprising:
- body elements (12) defining a housing (14) for receiving an engine or a compartment for holding objects;
- a housing closure unit (16) comprising at least the elements (28) of the group made up of:
■ an upper bonnet (30);
■ side wings (32A, 32B) extending downwards from the side edges (54A, 54B) of the bonnet (30);
■ a bumper shield (34) extending downwards from the front edge (56) of the bonnet (30);
■ two lights (36A, 36B) extending to the front of the bonnet (30) and/or the shield (34);
the elements (28) of the group being integrated with one another so as to be moved at the same time in relation to the body elements (12) between a housing closure position (14) and a position for access to the housing (14); **characterised in that** each element (28) of the group can be dismantled reversibly in relation to all of the other elements (28) of the group.

2. The front end module (10) according to Claim 1, **characterised in that** the closure unit (16) comprises an indexing lining (26), all of the elements (28) of the group being fitted detachably onto the lining (26), the lining (26) being moveable at the same time as all of the elements (28) of the group in relation to the body elements (12).

3. The front end module (10) according to any of Claims 1 or 2, **characterised in that** the closure unit (16) comprises means (38) for fixing each element (28) of the group onto the closure unit (16), the fixing means (38) comprising, for each element (28), a fixing blank (60, 66) integrated into the element (28) and a trough (80) for receiving the fixing blank (60, 66).

4. The front end module (10) according to Claim 3, **characterised in that** the fixing means (38) comprise a receiving trough (80) common to two adjacent elements (28) of the group, the common trough (80) receiving a fixing blank (60, 66) of each adjacent element (28).

5. The front end module (10) according to Claim 3 or 4, taken in combination with Claim 2, **characterised in that** the fixing trough (80) is passed over the lining (26).

6. The front end module (10) according to Claim 3 or 4, taken in combination with Claim 2, **characterised in that** the fixing trough (80) is made within the lining (26).

7. The front end module (10) according to any of Claims 3 to 6, **characterised in that** the or each blank (60, 66) defines a receiving opening (84), the fixing means (38) comprising a detent component (82) for each blank (60, 66) integrated into the trough (80), the detent component (82) being engaged in the or each receiving opening (84).

8. The front end module (10) according to Claim 7, **characterised in that** the detent component (84) is frangible.

9. The front end module (10) according to any of Claims 3 to 6, **characterised in that** the fixing means (38) comprise a screw component (110; 116) passed through the trough (80) and the fixing blanks (60, 66).

10. The front end module (10) according to Claim 9, **characterised in that** the screw component (100; 116) is received in a receiving opening (84) made in the blank (60, 66), the blank (60, 66) comprising a clearance region (120; 122) able to authorise the clearance of the screw component (110; 116) outside of the blank (60, 66), the clearance region (120; 122) extending between the receiving opening (84) and a free edge of the blank (60, 66).

## Patentansprüche

1. Vorderblock (10) für Kraftfahrzeuge der Art mit:
- Gehäuseelementen (12), die eine Aufnahme (14) zum Aufnehmen eines Motors oder eines Faches zur Lagerung von Gegenständen begrenzen;
- einer Verschlußanordnung (16) für die Aufnahme, welche zumindest die Elemente (28) der Gruppe aufweist, die besteht aus:
• einer oberen Abdeckhaube (30)
• seitlichen Flügeln (32A, 32B), die sich ausgehend von den Seitenkanten (54A, 54B) der Abdeckhaube (30) nach unten erstrecken;
• einem verformbaren Stoßfänger (34), der sich ausgehend von der Vorderkante (56) der Abdeckhaube (30) nach unten erstreckt;
• zwei Scheinwerfern (36A, 36B), die sich im vorderen Bereich der Abdeckhaube (30) und/oder des Stoßfängers (34) erstrecken;
wobei die Elemente (28) der Gruppe miteinander einstückig ausgebildet sind, um gemeinsam bezüglich der Gehäuseelemente (12) zwischen einer Verschlussposition für die Aufnahme (14) und einer Zugangsposition zu der Aufnahme verschoben zu werden;
**dadurch gekennzeichnet, dass** jedes Element (28) der Gruppe bezüglich aller anderen Elemente (28) der Gruppe reversibel ausbaubar ist.

2. Vorderblock (10) gemäß Anspruch 1, **dadurch gekennzeichnet, dass** die Verschlussanordnung (16) eine Anzeigenverkleidung (26) aufweist, wobei alle Elemente (28) der Gruppe abnehmbar auf der Verkleidung (26) angebracht sind, wobei die Verkleidung (26) gemeinsam mit allen Elementen (28) der Gruppe bezüglich der Gehäuseelemente (12) beweglich ist.

3. Vorderblock (10) gemäß einem der Ansprüche 1 oder 2, **dadurch gekennzeichnet, dass** die Verschlußanordnung (16) Vorrichtungen (38) zur Befestigung jedes Elementes (28) der Gruppe an der Verschlußanordnung (16) aufweist, wobei die Befestigungsvorrichtungen (389 für jedes Element (28) ein mit dem Element (28) einstückig ausgebildetes Befestigungsplättchen (28) und eine Aufnahmerinne (80) für das Befestigungsplättchen (60,66) aufweisen.

4. Vorderblock (10) gemäß Anspruch 3, **dadurch gekennzeichnet, dass** die Befestigungsvorrichtungen (38) eine für zwei aneinander angrenzende Elemente der Gruppe gemeinsame Aufnahmerinne (80) aufweisen, wobei die gemeinsame Rinne (80) ein Befestigungsplättchen (60, 66) jedes angrenzenden Elementes (28) aufnimmt.

5. Vorderblock (10) gemäß Anspruch 3 oder 4, in Kombination mit Anspruch 2 genommen, **dadurch gekennzeichnet, dass** die Befestigungsrinne (80) auf der Verkleidung (26) aufgesetzt ist.

6. Vorderblock (10) gemäß Anspruch 3 oder 4, in Kombination mit Anspruch 2 genommen, **dadurch gekennzeichnet, dass** die Befestigungsrinne (80) in der Verkleidung (26) ausgebildet ist.

7. Vorderblock (10) gemäß irgendeinem der Ansprüche 3 bis 6, **dadurch gekennzeichnet, dass** das oder jedes Plättchen (60, 66) eine Aufnahmeöffnung (84) begrenzt, wobei die Befestigungsvorrichtungen (38) ein Einrastorgan (82) für jedes Plättchen (60, 66) aufweisen, das einstückig mit der Rinne (80) ausgebildet ist, wobei das Einrastorgan (82) in die oder jede Aufnahmeöffnung (84) eingreift.

8. Vorderblock (10) gemäß Anspruch 7, **dadurch gekennzeichnet, dass** das Einrastorgan (84) nicht elastisch (zerbrechlich) ist.

9. Vorderblock (10) gemäß irgendeinem der Ansprüche 3 bis 6, **dadurch gekennzeichnet, dass** die Befestigungsvorrichtungen (38) ein Verschraubungsorgan (110; 116) aufweisen, welches durch die Rinne (80) und die Befestigungsplättchen (60, 66) hindurch angebracht ist.

10. Vorderblock (10) gemäß Anspruch 9, **dadurch gekennzeichnet, dass** das Verschraubungsorgan (110; 116) in einer in dem Plättchen (60, 66) ausgebildeten Aufnahmeöffnung (84) aufgenommen wird, wobei das Plättchen (60, 66) einen Herauslösebereich (120; 122) aufweist, der dazu geeignet ist, das Herauslösen des Verschraubungsorgans (110; 116) aus dem Plättchen (60, 66) zu ermöglichen, wobei sich der Herauslösebereich (120; 122) zwischen der Aufnahmeöffnung (84) und einer freien Kante des Plättchens (60, 66) erstreckt.
